# EUROPEAN PATENT SPECIFICATION

(11) **EP 2 797 706 B1**
(45) Date of publication and mention of the grant of the patent: **02.10.2019**
(21) Application number: 12816373.0
(22) Date of filing: 21.12.2012
(51) Int. Cl.: B21K 23/00, B21K 23/02, F16G 5/16

(54) **METHOD FOR FORMING A TILTING ZONE ON A TRANSVERSE ELEMENT FOR A PUSH BELT FOR A CONTINUOUSLY VARIABLE TRANSMISSION**
VERFAHREN ZUR HERSTELLUNG EINER NEIGEZONE AUF EINEM QUERELEMENT FÜR EINEN SCHUBRIEMEN FÜR EIN STUFENLOS REGELBARES GETRIEBE
PROCÉDÉ DE FORMATION D'UNE ZONE DE BASCULEMENT SUR UN ÉLÉMENT TRANSVERSAL POUR COURROIE DE POUSSÉE POUR UNE TRANSMISSION VARIABLE EN CONTINU

(30) Priority: 29.12.2011 NL 1039272
(43) Date of publication of application: 05.11.2014
(73) Proprietor: Robert Bosch GmbH, 70442 Stuttgart (DE)
(72) Inventor: KOOPMANS, Spike, Jan, NL-5045 LP Tilburg (NL); ROMPEN, Guillaume, Gerard, Hubertus, NL-6151 AA Munstergeleen (NL)
(74) Representative: Griebling, Onno
(86) International application number: PCT/NL2012/000079
(87) International publication number: WO 2013/100759

(56) References cited:
- WO-A1-2007/142517
- JP-A- 2004 183 840
- JP-A- 2006 192 459
- JP-A- 2010 137 240
- US-B1- 6 440 024

## Description

The invention relates to a method for forming a convex tilting zone in a defined tilting zone formation area of a main body surface of a transverse element which is destined to be part of a push belt for a continuously variable transmission having two pulleys for suspending the push belt, wherein a tool element is pressed against the main body surface adjacent to the tilting zone formation area in order to realize a displacement of material over the main body surface, and wherein the tilting zone is formed on the basis of retraction of material as a consequence of pressing the tool element against the main body surface.

Such a method is disclosed in WO-A-2007142517.

A push belt for a continuously variable transmission is generally known. Usually, such a push belt comprises two endless, ribbon-like carriers shaped like a closed loop for carrying a relatively large number of transverse elements. The transverse elements are arranged along the entire circumference of the carriers, wherein, during operation, they are able to transmit forces which are related to a movement of the push belt. Both the carriers and the transverse elements are manufactured from metal.

In the following description of the transverse element, the directions as mentioned refer to the situation in which the transverse element is part of the push belt. A longitudinal direction of the transverse element corresponds to a circumferential direction of the push belt. A vertical transverse direction of the transverse element corresponds to a radial direction of the push belt. A horizontal transverse direction of the transverse element corresponds to a direction perpendicular to both the longitudinal direction and the vertical transverse direction.

The transverse element has a first main body surface and a second main body surface, which are extending substantially parallel with respect to each other, substantially perpendicular to the longitudinal direction. The two main body surfaces have substantially the same contour, but a relief which is provided in each of the main body surfaces is different. At least a portion of the first main body surface of the transverse element is destined to contact at least a portion of the second main body surface of an adjacent transverse element in the push belt, whereas at least a portion of the second main body surface of the transverse element is destined to contact at least a portion of the first main body surface of another adjacent transverse element in the push belt. A circumferential surface, which has a relatively small dimension in the longitudinal direction, is extending between the two main body surfaces.

Two portions of the circumferential surface of the transverse element are destined to function as support surfaces for supporting the carriers of a push belt. These support surfaces are extending at an equal level. Two other portions of the circumferential surface of the transverse element are destined to function as contact surfaces for realizing contact between the transverse element and pulley sheaves of a pulley of a continuously variable transmission. These contact surfaces are extending at an angle with respect to each other, wherein these contact surfaces are divergent in a direction towards the support surfaces. The terms "top", "bottom", "upper" and "lower" which are used in the following are related to the direction of divergence, which is defined as being from bottom to top.

In the vertical transverse direction, from bottom to top, the transverse element comprises successively a basic portion, a neck portion and a top portion, wherein, in the horizontal transverse direction, the dimensions of the neck portion are relatively small. The basic portion comprises the support surfaces and the contact surfaces. In the push belt, the basic portion is located at the side of the inner circumference of the push belt, whereas the top portion is located at the side of the outer circumference of the push belt.

In one of the main body surfaces of the transverse element, a convex zone is located, which will hereinafter be referred to as tilting zone. This zone is extending along an entire width of the transverse element, and forms an even and round transition between two planar areas of the main body surface, which are located above each other in the vertical transverse direction. Usually, the tilting zone is located in a top part of the basic portion. An important function of the tilting zone is guaranteeing mutual contact between adjacent transverse elements which are located between the pulley sheaves of a pulley during operation of the push belt, and which are performing a tilting movement with respect to each other. By maintaining contact along a defined line, it is achieved that the forces which are related to a movement of the push belt are transmitted between adjacent transverse elements in a controlled fashion, under all circumstances.

According to a conventional method, the tilting zone is formed in the main body surface of the transverse element by clamping the transverse element or a piece of basic material from which the transverse element is manufactured between two tool elements, wherein a surface of one of the tool parts has a concave portion, as a negative of the convex tilting zone to be formed. When the tool elements having the transverse element positioned between them are moved towards each other under the influence of pressure, a displacement of material over a main body surface of the transverse elements, which is located at the side of the tool element having the concave portion, is being forced. Particularly, it is achieved that material flows into a space which, in a first instance, is offered by the concave portion of the surface of the tool element. In this way, the convex zone is obtained on the main body surface of the transverse element.

The conventional method for forming the tilting zone in the main body surface of the transverse element has a number of disadvantages. In the first place, it is a costly matter to manufacture a tool element having a surface with an accurately defined concave portion. In the second place, the pressing forces which are needed to move the tool elements having the transverse element positioned between them towards each other are relatively high, as a consequence of which a relatively heavy construction is needed. In practice, there is a considerable risk that a required level of the pressing forces is not reached, and that the shape of the concave portion of the surface of the transverse element is not exactly taken up in the main body surface of the transverse element, as a consequence of which the shape of the eventually obtained tilting zone deviates from a defined shape.

In order to avoid the disadvantages of the conventional method, it is preferred to use an alternative method which will hereinafter be referred to as material retraction method, and which is known from WO 2007/142517. According to this method, a tool element is pressed against the main body surface adjacent to the tilting zone formation area in order to realize a displacement of material over the main body surface, wherein retraction of material as a consequence of pressing the tool element against the main body surface is an important factor in the formation of the tilting zone. Hence, a special feature of the material retraction method is the fact that the tool element acts on the main body surface outside of the area in which the tilting zone needs to be formed, wherein a phenomenon which is known as retraction of the metal of the transverse element is being used. By doing so, the tilting zone is obtained in an indirect manner, on the basis of material behavior occurring at the position of an edge of an area against which the tool element is being pressed. In the process, it is possible for the tool element to leave the tilting zone formation area clear, as the indirect formation of the tilting zone does not require contact between the tool element and the main body surface at the position of the tilting zone formation area.

By pressing a tool element against the main body surface of the transverse element, and realizing a recess in the main body surface with respect to a surrounding area of the main body surface, retraction takes place in an area along an edge of this recess. As a consequence, a gradual transition between the recess and the surrounding area is obtained, wherein this transition is provided with a convex curvature. On the basis of this fact, the transition which is extending along an edge of the area of the main body surface against which the tool element is pressed is suitable to function as tilting zone.

In order to obtain a result which is as accurate as possible when the material retraction method is applied, the tool element is pressed against the main body surface of the transverse element adjacent to the tilting zone formation area. In this way, it is realized that the retraction takes place in the area which is destined for this purpose, as a result of which it is possible to accurately position the tilting zone formed on the basis of the retraction.

The material retraction method provides a number of important advantages. It is possible to apply a tool element having a functional portion with a relatively simple shape, wherein an even displacement of material over the main body surface of the transverse element is obtained, and pressures which are not too high may be applied. Among other things, as a consequence of these facts, the formation of a tilting zone in a main body surface of a transverse element is a process which is well reproducible, with which a defined position and shape of the tilting zone may be realized.

The material retraction method is applicable in various processes for manufacturing transverse elements. An example of such a process is a process which is known as fine blanking, wherein the transverse elements are blanked out of a sheet or strip of basic material, wherein not only a cutting member, but also a supporting member is applied, and wherein a transverse element to be formed is located between these two members. Another example of such a process is a process wherein the transverse elements are formed by successively carrying out various cutting actions and treatments of the surface of a transverse element to be formed. In this process, forming the tilting zone by pressing a tool element against a main body surface of a transverse element to be formed may simply be one of the treatment steps.

It is an objective of the invention to improve the known material retraction method for forming a tilting zone in a main body surface of a transverse element. In particular, it is an objective of the invention to further decrease the pressure needed for pressing a tool element against a main body surface of a transverse element, and to provide a tilting zone formation process which is more reliable and reproducible.

The objective as formulated in the previous paragraph is achieved by a method for forming a convex tilting zone in a defined tilting zone formation area of a main body surface of a transverse element which is destined to be part of a push belt for a continuously variable transmission having two pulleys for suspending the push belt, wherein a tool element having a stepped surface for at least partially contacting the main body surface is provided, wherein the tool element is pressed against the main body surface adjacent to the tilting zone formation area in order to realize a displacement of material over the main body surface, and wherein the tilting zone is formed on the basis of retraction of material as a consequence of pressing the tool element against the main body surface. Hence, the invention provides a material retraction method in which a tool element having a stepped surface at the side where the tool element faces the main body surface of the transverse element and is pressed against the main body surface is applied.

On the basis of the stepped appearance of the surface of the tool element, it is possible to have a reduction of pressure needed for forming a tilting zone, indeed. In general, in a stepped appearance, at least two areas extending at different levels can be discerned. Thus, in this case with the tool element, when the tool element is moved towards the main body surface of the transverse element, the main body surface is contacted first by an area extending at a relatively high level in the tool element. As a result of the contact thus obtained, a clamping action on the transverse element is obtained before contact between the area extending at a relatively low level in the tool element and the main body surface takes place. Hence, processing the main body surface by means of the area extending at the relatively low level in the tool element can take place in a well-defined manner. As it is possible within the context of the invention to choose an orientation of the tool element in which the area extending at the relatively low level in the tool element is positioned adjacent to the tilting zone formation area, it is possible to let the tilting zone formation process take place in a manner which is more accurate than when a tool element having an overall planar surface is applied, wherein it is not possible to have a clamping action before the actual tilting zone formation process.

It follows from the foregoing that the formation of a tilting zone by applying the method according to the invention is more reliable and accurate than the formation of a tilting zone by applying the method known from WO 2007/142517. An additional advantage of the method according to the invention is that it is possible to form a tilting zone having a cross-section which is approximately circular when suitable dimensions of the stepped surface of the tool element are chosen. In any case, the shape of the cross-section of the tilting zone can be closer to a circular shape than in a situation in which the known material retraction method is applied, and in which the shape of the cross-section of the tilting zone is more like an elliptical shape. The pressing forces needed for forming a tilting zone have been found to be lower than with the known material retraction method when a comparison is made with the assumption of a tool element of a certain size. It appears to be possible to realize the desired shape of the main body surface of the transverse element with a pressing movement of the tool element which is on average smaller than in the known situation in which the tool element contacts the main body surface through a surface which is entirely planar.

The stepped surface of the tool element may comprise two substantially planar surfaces extending at different levels, and a step surface extending between the substantially planar surfaces. Planar surfaces are relatively easy to manufacture due to their simple shape, so that such a tool element is relatively cheap. Advantageously, the tool element is pressed against the main body surface in an orientation in which a substantially planar surface extending at a relatively low level in the tool element is adjacent to the tilting zone formation area, and in which a substantially planar surface extending at a relatively high level in the tool element is further remote from the tilting zone formation area. As explained in the foregoing, in that way, it is achieved that a retaining effect is obtained due to contact between the surface extending at a relatively high level, which will hereinafter be referred to as the elevated surface, and the main body surface of the transverse element, so that a more accurate tilting zone formation process is realized when the surface extending at a relatively low level, which will hereinafter be referred to as recessed surface, is pressed against the main body surface and causes retraction to take place just outside of the area which is subjected to pressure.

The main body surface of the transverse element may have a stepped shape and may comprise at least two areas which are extending at different levels and a step surface extending between the areas. Usually, an area of the main body surface on a bottom part of the basic portion of the transverse element is recessed with respect to a portion of the main body surface which is at a higher location. As a result, unwanted contact between the bottom parts of the basic portions of adjacent transverse elements which are positioned in a push belt, and which are moving in the push belt over a pulley of a continuously variable transmission, is avoided. In such a case, the tilting zone needs to be formed at the place of a top part of the basic portion of the transverse element. In the process, it is sufficient to press the tool element on the basic portion exclusively against an area extending at a relatively high level in the main body surface of the transverse element, i.e. an elevated area of the main body surface of the transverse element.

Preferably, the tool element is pressed against the main body surface of the transverse element in a position in which both the recessed surface of the tool element and only a portion of the elevated surface of the tool element cover an area of the main body surface which is located between the tilting zone formation area and the step surface. In that way, it is achieved that initially, there is a remaining portion of the elevated surface of the tool element. During the pressing process, this remaining portion serves as a delimitation for the material being deformed, and gradually comes into contact with the material, as a result of which it is ensured that a final shape of the main body surface of the transverse element meets predetermined requirements.

In a practical way of carrying out the method according to the invention, the elevated surface of the tool element is made to move over a distance which is in an order of twice a dimension of the step surface of the tool element, measured in a direction in which the tool element is pressed against the main body surface of the transverse element, starting from a position of initial contact between the tool element and the main body surface. For example, the distance over which the elevated surface of the tool element is moved is about 0.15 mm, and the dimension of the step surface of the tool element is about 0.07 mm. In such a case, a distance over which the recessed surface of the tool element is moved is about 0.08 mm, starting from the position of initial contact between the tool element and the main body surface.

The invention will be further explained on the basis of the following description of the invention with reference to the drawing, in which equal reference signs indicate equal or similar components, and in which:
figure 1 diagrammatically shows a side view of a continuously variable transmission having a push belt;
figure 2 diagrammatically shows a front view of a transverse element for a push belt for a continuously variable transmission;
figure 3 diagrammatically shows a side view of the transverse element shown in figure 2;
figure 4 diagrammatically shows a side view of two adjacent transverse elements as located between pulley sheaves of a pulley of the continuously variable transmission shown in figure 1;
figures 5a and 5b illustrate a known material retraction method for forming a tilting zone in a main body surface of a transverse element;
figure 6 illustrates a displacement of material over the main body surface of a transverse element which is obtained by application of the known material retraction method;
figure 7 diagrammatically shows a front view of a transverse element which is obtained by application of the known material retraction method as illustrated in figures 5a and 5b;
figure 8 diagrammatically shows a side view of the transverse element shown in figure 7;
figures 9a and 9b illustrate a material retraction method according to the invention;
figure 10 diagrammatically shows an enlarged view of a portion of a die which is used in the material retraction method according to the invention;
figure 11 illustrates a displacement of material over the main body surface of a transverse element which is obtained by application of the material retraction method according to the invention;
figure 12 diagrammatically shows a front view of a transverse element which is obtained by application of the material retraction method according to the invention; and
figure 13 diagrammatically shows a side view of the transverse element shown in figure 12.

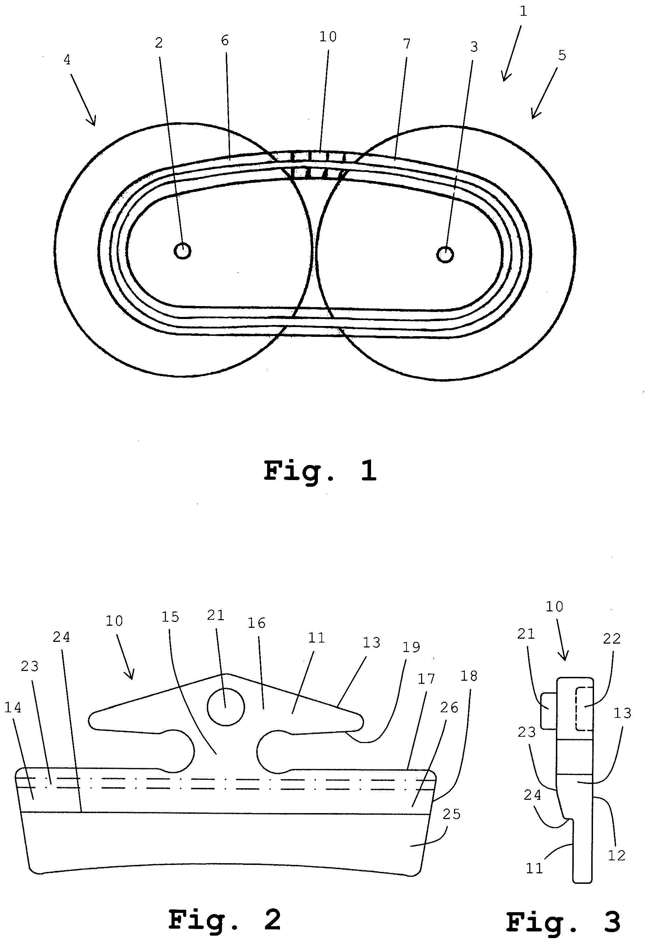

Figure 1 diagrammatically shows a continuously variable transmission, which is especially suitable for utilization in a motor vehicle. The continuously variable transmission is indicated in general by the reference sign 1.

The continuously variable transmission 1 comprises two pulleys 4, 5 which are arranged on separate pulley shafts 2, 3. An endless push belt 6 being shaped like a closed loop is arranged around the pulleys 4, 5, and serves for transmitting torque between the pulley shafts 2, 3. Each of the pulleys 4, 5 comprises two pulley sheaves, wherein the push belt 6 is positioned and clamped between said two pulley sheaves, so that a force may be transmitted between the pulleys 4, 5 and the push belt 6 with the help of friction.

The push belt 6 comprises at least one endless carrier 7, which is usually composed of a number of rings. Along the entire length of the carrier 7, transverse elements 10 are arranged, wherein the transverse elements 10 are mutually adjacent to each other and are moveable with respect to the carrier 7 in the circumferential direction. For sake of simplicity, only a number of these transverse elements 10 is shown in figure 1. Both the carrier 7 and the transverse elements 10 are manufactured from metal.

Figures 2 and 3 diagrammatically show a transverse element 10. A first main body surface of the transverse element 10 is indicated in general by the reference sign 11, whereas a second main body surface of the transverse element 10 is indicated in general by the reference sign 12. A circumferential surface 13 is extending between the main body surfaces 11, 12.

In the vertical transverse direction, the transverse element 10 comprises successively a basic portion 14, a relatively narrow neck portion 15 and a top portion 16 being shaped like the tip of an arrow. In the push belt 6, the basic portion 14 is located at the side of the inner circumference of the push belt 6, whereas the top portion 16 is located at the side of the outer circumference of the push belt 6. Furthermore, in a push belt 6, at least a portion of the first main body surface 11 of the transverse element 10 contacts at least a portion of the second main body surface 12 of an adjacent transverse element 10, whereas at least a portion of the second main body surface 12 of the transverse element 10 contacts at least a portion of the first main body surface 11 of another adjacent transverse element 10. At the transition to the neck portion 15, the basic portion 14 of the transverse element 10 as shown in figure 2 comprises two carrying surfaces 17 which serve for supporting two carriers 7. Furthermore, the basic portion 14 comprises two pulley sheave contact surfaces 18. When the transverse element 10 moves over a pulley 4, 5, contact between the transverse element 10 and contact surfaces of the pulley sheaves is realized through said pulley sheave contact surfaces 18. Both the carrying surfaces 17 and the pulley shave contact surfaces 18 are part of the circumferential surface 13.

A projection 21 is arranged at the first main body surface 11 of the transverse element 10. In the shown example, the projection 21 is located at the top portion 16, and corresponds to a recess 22 in the second main body surface 12. In the push belt 6, the projection 21 of the transverse element 10 is at least partly located in the recess 22 of an adjacent transverse element 10. The projection 21 and the corresponding recess 22 serve to prevent mutual displacement of adjacent transverse elements 10 in a plane perpendicular to the circumferential direction of the push belt 6.

The top portion 16 comprises two retaining surfaces 19 which are located opposite to the carrying surfaces 17, and which are part of the circumferential surface 13. When the transverse element 10 is received in a push belt 6, a space in which the carriers 7 are located is delimited by the carrying surfaces 17 on the one hand and by the retaining surfaces 19 on the other hand in the radial direction.

Besides a projection 21, a tilting zone 23 and a step surface 24 are also arranged at the first main body surface 11 of the transverse element 10. The step surface 24 is located between a bottom part 25 and a top part 26 of the basic portion 14, wherein the first main body surface 11 has a recessed location at the place of the bottom part 25 of the basic portion 14. The tilting zone 23 is located in the top part 26 of the basic portion 14, at a small distance with respect to the carrying surfaces 17, and is extending along an entire width of the transverse element 10. The tilting zone 23 is shaped as a convexly curved transition area at the main body surface 11 of the transverse element 10, and serves to guarantee a defined mutual contact between adjacent transverse elements 10 in the push belt 6 under all circumstances, also when the transverse elements 10 are moving over a pulley 4, 5 of the continuously variable transmission 1 and need to follow a circular path. In figure 2, an upper edge and a lower edge of the tilting zone 23 are diagrammatically indicated by means of dot and dash lines.

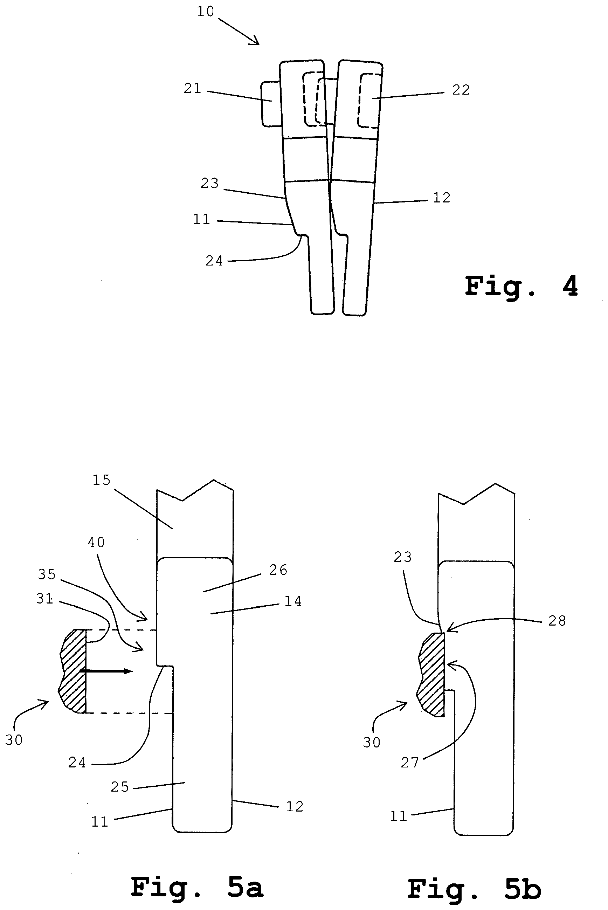

Figure 4 serves to illustrate a mutual positioning of two adjacent transverse elements 10 which are located between pulley sheaves of a pulley 4, 5. For sake of clarity, in this figure, the recess 22 of the transverse element 10 is diagrammatically indicated by means of dashed lines. In the figure, it may be clearly seen that the transverse elements 10 only contact each other at the place of the tilting zone 23.

In the following, a method for forming the tilting zone 23 in the main body surface 11 of the transverse element 10, which will hereinafter be referred to as material retraction method, will be described on the basis of figures 5a and 5b. For sake of completeness, it is noted that the method is known from WO 2007/142517.

Figure 5a diagrammatically shows a side view of the basic portion 14 and an adjacent part of the neck portion 15. In this figure, a level difference in the first main body surface 11 at the place of the bottom part 25 and the top part 26 of the basic portion 14 may be clearly seen, as well as the step surface 24 which is located between these two parts 25, 26. Prior to the formation of the tilting zone 23, the first main body surface 11 may be entirely planar at the place of both parts 25, 26 of the basic portion 14, as is the case in the shown example.

For the purpose of forming the tilting zone 23, a die 30 is applied, which has a substantially planar contact surface 31. The die 30 is pressed against the first main body surface 11 of the transverse element 10. In figure 5a, a movement of the die 30 towards the transverse element 10 is indicated by means of an arrow. Two dashed lines in figure 5a indicate a top limit and a bottom limit, respectively, of an area 35 of the first main body surface 11 over which the contact surface 31 is extending.

In figure 5b, it is shown how the die 30 is positioned against the first main body surface 11 of the transverse element 10. An area of the contact surface 31 of the die 30 is put in contact with an area of the first main body surface 11 which is located between the step surface 24 and an area where the tilting zone 23 needs to be formed, whereas another area of the contact surface 31 of the die 30 is projecting with respect to the step surface 24 and is extending at a distance with respect to the bottom part 25 of the basic portion 14.

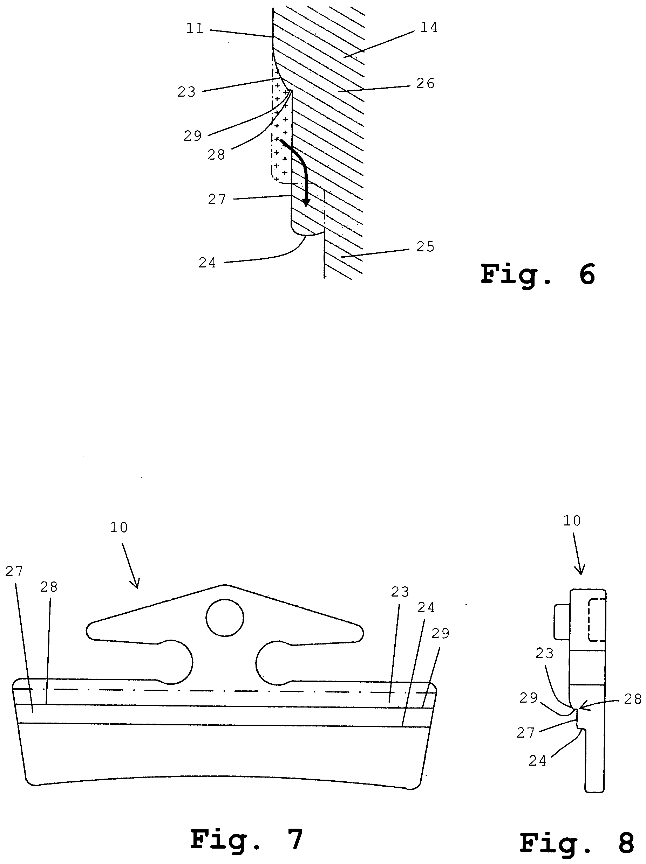

The tilting zone 23 is actually formed in the first main body surface 11 of the transverse element 10 by exerting pressure on the die 30, in a direction substantially perpendicular to the contact surface 31 of the die 30. Under the influence of this pressure, a displacement of material over the first main body surface 11 takes place, which is indicated by means of an arrow in figure 6, in which a side view of a portion of the transverse element 10 with the tilting zone 23 and the step surface 24 is shown. In this figure, an original contour of the first main body surface 11 is depicted by means of a dot and dash line.

Under the influence of the pressure which is exerted on the die 30, an area 27 of the top part 26 of the basic portion 14, which area 27 is in contact with the die 30, is recessed, wherein the step surface 24 displaces downwardly as a result of the fact that material flows in a space between the contact surface 31 of the die 30 and the bottom part 25 of the basic portion 14. For sake of completeness, it is noted that the transverse element 10 is supported in a suitable manner along the side of the second main body surface 12 during the treatment with the die 30.

Along an upper edge 28 of the recessed area 27 which is obtained, retraction of the material of the transverse element 10 takes place. As a result thereof, a round area is obtained in the first main body surface 11, which forms a transition between the recessed area 27 and the top part 26 of the basic portion 14. This round area is convexly curved, and a top part thereof, which approximately describes a segment of a circle, appears to be suitable to function as tilting zone 23. By positioning the die 30 right underneath a defined area 40 in which the tilting zone 23 needs to be located for the purpose of forming the tilting zone 23, it is achieved that the tilting zone 23 is formed at the appropriate place in the first main body surface 11 of the transverse element 10.

According to the above-described method, the tilting zone 23 is formed in an indirect manner, namely by pressing a die 30 against the main body surface 11 of the transverse element 10, wherein the tilting zone 23 is formed because retraction takes place along an upper edge 28 of the area 35 of the first main body surface 11 at which there is contact with the die 30. As a consequence of the presence of the step surface 24 between the bottom part 25 and the top part 26 of the basic portion 14 of the transverse element 10, the pressure which is needed for the purpose of forming the recessed area 27 and the tilting zone 23 connected thereto may remain limited, because the material of the transverse element 10 has the possibility to flow from the area 35 where the die 30 and the transverse element 10 are contacting each other, over the bottom part 25, which is at a lower level. Preferably, a distance between the step surface 24 and the area 40 where the tilting zone 23 needs to be formed is kept as small as possible, so that, for the purpose of the formation of the recessed area 27, a displacement of material which is as small as possible is required, and the pressure with which the die 30 is pressed against the transverse element 10, may be as low as possible.

A particular aspect of the material retraction method as described is that the shape of the tilting zone 23 is not dictated by a shaping die which is applied, or the like. In stead, the tilting zone 23 is formed in an area 40 which does not touch a tool element. An important insight underlying the material retraction method is that a retraction area which is obtained at an edge of an area 35 of the first main body surface 11 of the transverse element 10, which area 35 is recessed under pressure, is convexly curved, and is suitable to function as tilting zone 23.

Figures 7 and 8 diagrammatically show the appearance of a transverse element 10 which is obtained by application of the known material retraction method. In figure 7, an upper edge of the tilting zone 23 which is formed according to the known material retraction method is diagrammatically indicated by means of a dot and dash line. The transverse element 10 has a substantially planar recessed area 27 which is extending from the step surface 24 in an upward direction, with a retraction area which constitutes the tilting zone 23 along an upper edge 28. This tilting zone 23 has a radius of curvature which decreases in a downward direction, in other words, which approximately describes a segment of an ellipse. The convexly curved tilting zone 23 is connected to the recessed area 27 through a step surface 29, wherein, in the longitudinal direction of the transverse element 10, a dimension of the step surface 29 is relatively small, as this dimension is substantially equal to a distance over which the die 30 is pressed in the first main body surface 11 of the transverse element 10 minus a dimension in the longitudinal direction of the retraction area. Furthermore, the transverse element 10 is roughly equal to a conventional transverse element 10, for example, the transverse element 10 as shown in figures 2 and 3, and the transverse element 10 may be applied and function in a same manner.

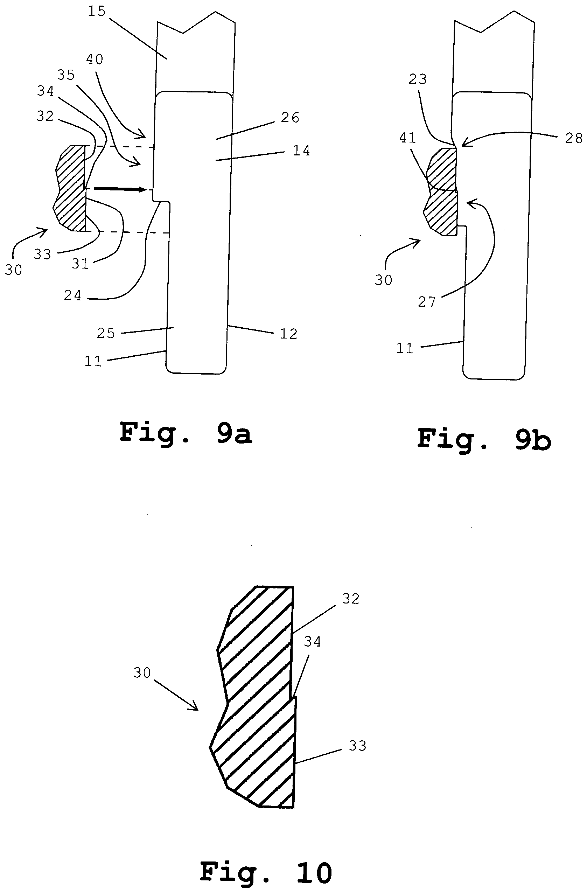

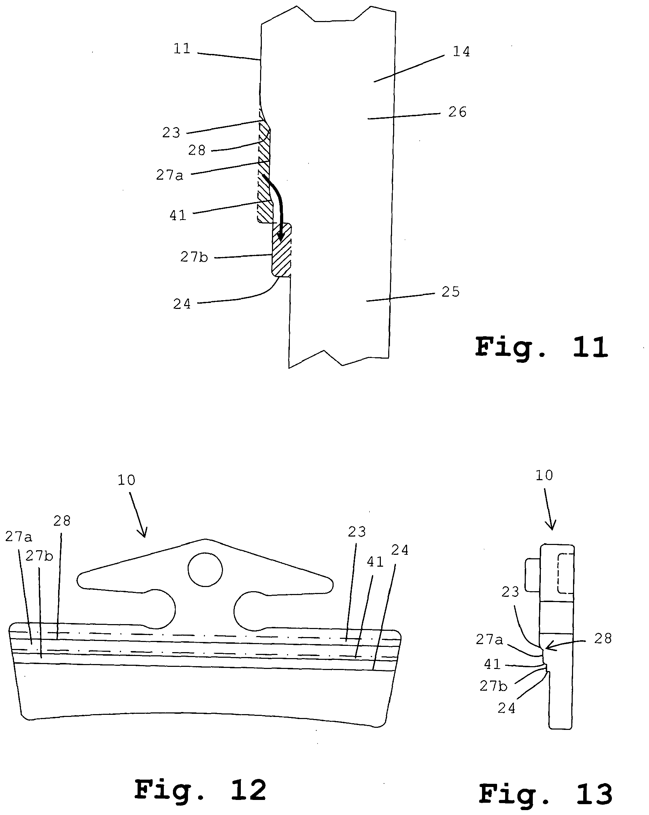

Figures 9a, 9b, 10, 11, 12 and 13 relate to the material retraction method according to the invention, which is an alternative and an improvement of the known material retraction method described in the foregoing. In particular, figures 9a and 9b serve to illustrate the actual tilting zone formation process, figure 10 diagrammatically shows a portion of a die 30 which is used in the process, figure 11 serves to illustrate the displacement of material over the first main body surface 11 of the transverse element 10 during the process, and figures 12 and 13 diagrammatically show views of a transverse element 10 having a tilting zone 23 which is formed as a result of the process.

An important difference between the known material retraction method and the material retraction method according to the invention resides in the design of the die 30 which is used when the method is performed. According to the invention, the die 30 which is pressed against the first main body surface 11 of the transverse element 10 does not comprise a substantially planar contact surface 31. In stead, the surface 31 of the die 30 has a stepped appearance, wherein the surface 31 comprises two substantially planar portions 32, 33 extending at different levels, and wherein a step surface 34 is present between the portions 32, 33 for interconnecting the portions 32, 33. In the following, the surface portion 32 extending at a relatively low level in the die 30 will be denoted as recessed surface 32, and the surface portion 33 extending at a relatively high level in the die 30 will be denoted as elevated surface 33. For sake of completeness, it is noted that in the shown example, the surfaces 32, 33 of the die 30 are orientated such as to extend substantially parallel with respect to each other. The surfaces 32, 33, 34 are clearly illustrated in figure 10, in which a portion of the die 30 having the stepped surface 31 is shown.

Figure 9a illustrates a position of the die 30 with respect to the transverse element 10 before the die 30 is pressed against the first main body surface 11 of the transverse element 10. In this position, the die 30 is disposed with the stepped surface 31 facing the area 35 of the first main body surface 11 which is intended to be contacted by the die 30. In figure 9a, two dashed lines indicate a top limit and a bottom limit, respectively, of an area 35 of the first main body surface 11 over which the stepped surface 31 is extending. In the shown example, the recessed surface 32 and the elevated surface 33 of the tool 30 extend substantially parallel to the first main body surface 11 with the exception of the step surface 24 which is present in the first main body surface 11. Furthermore, the step surface 34 of the die 30 is offset with respect to the step surface 24 which is present in the first main body surface 11. As a result, both the recessed surface 32 and a portion of the elevated surface 33 face an area of the top part 26 of the basic portion 14 of the transverse element 10. Another portion of the elevated surface 33, which is a relatively large portion, faces the bottom part 25 of the basic portion 14.

In order to have a process of deforming the first main body surface 11 and forming a convex tilting zone 23 in the first main body surface 11, the die 30 and the transverse element 10 are moved towards each other, for example, by moving the die 30 in the direction of the transverse element 10 while keeping the transverse element 10 in a fixed position. In figure 9b, a movement of the die 30 towards the transverse element 10 is indicated by means of an arrow. As a result of the movement, initial contact between the die 30 and the transverse element 10 is made, at the position of the top part 26 of the basic portion 14 of the transverse element 10. Starting from that position, the movement is continued under the influence of pressing forces, wherein material is forced to move away from the area 35 where the first main body surface 11 is contacted by the die 30. Due to that process, the first main body surface 11 is deformed. The movement of the die 30 is continued until a certain distance with respect to the initial position is covered. In the process, retraction of material takes place at an edge 28 of a recessed area 27 which is obtained in the top part 26 of the basic portion 14. As a result, a convex tilting zone 23 is formed adjacent to the edge 28 as mentioned, in the same way as described earlier in respect of the known material retraction method. In this case, the tilting zone 23 approximately describes a segment of a circle rather than an ellipse.

In particular, in the movement of the die 30, the die 30 contacts the first main body surface 11 of the transverse element 10 first through the elevated surface 33. The first contact involves a clamping action, so that it is possible to have a well-defined position of the die 30 and the first main body surface 11 when the movement is continued. At a certain moment during the movement, the die 30 contacts the first main body surface 11 through the recessed surface 32 as well. From that moment on, the tilting zone 23 is formed on the basis of retraction of material, adjacent to an edge 28 of the area 27 which is subjected to pressure by means of the die 30, namely the edge 28 which is present at the side of the area 27 associated with the recessed surface 32. Due to the clamping action realized at an earlier stage, the formation of the tilting zone 23 takes place in a very accurate manner.

Figure 9b illustrates a final position of the die 30 with respect to the transverse element 10, i.e. a position associated with the maximum displacement of the die 30 and the transverse element 10 with respect to each other during the pressing process. In this position, the deformation of the first main body surface 11 of the transverse element 10 is ready. Figure 11 illustrates the way in which a displacement of material over the first main body surface 11 takes place, which is indicated by means of an arrow in figure 11, in which a side view of a portion of the transverse element 10 with the tilting zone 23 and the step surface 24 is shown. In this figure, an original contour of the first main body surface 11 is depicted by means of a dot and dash line. It can be seen that the step surface 24 of the transverse element 10 is displaced in a downward direction, wherein material has filled a space between the elevated surface 33 of the die 30 and the bottom part 25 of the basic portion 14 of the transverse element 10.

Besides the convex tilting zone 23 which is obtained adjacent to the edge 28 of the recessed area 27, another convex zone 41 is obtained in the first main body surface 11 of the transverse element 10, namely at a position which corresponds to the position of the step surface 34 of the die 30. At this position, another process of retraction of material has taken place. As a result, as seen in a direction from the top part 26 to the bottom part 25 of the basic portion 14 of the transverse element 10, the tilting zone 23, a substantially planar recessed area 27a, another convex zone 41, another substantially planar recessed area 27b, at a lower level than the first recessed area 27a, and a step surface 24 are successively located in the first main body surface 11. For sake of completeness, it is noted that in practice, on the basis of the retraction of material at the location corresponding to an upper edge of the die 30, which results in the formation of the tilting zone 23, a relatively small step surface (not shown) can be obtained between the tilting zone 23 and the recessed area 27a which is present right underneath the tilting zone 23, in the same way as described in the foregoing with respect to the known material retraction method. Likewise, on the basis of the retraction of material at the location corresponding to the step surface 34 of the die 30, which results in the formation of the convex zone 41, a relatively small step (not shown) can be obtained between the convex zone 41 and the recessed area 27b which is present right underneath the convex zone 41.

Figures 12 and 13 diagrammatically show the appearance of a transverse element 10 which is obtained by application of the material retraction method according to the invention. In figure 12, an upper edge of the tilting zone 23 is diagrammatically indicated by means of a dot and dash line. The same is applicable to an upper edge of the convex zone 41 which is formed as a result of the presence of the step surface 34 in the die 30.

It will be clear to a person skilled in the art that the scope of the invention is not limited to the examples discussed above, but that several amendments and modifications thereof are possible without deviating from the scope of the invention as defined in the appended claims.

In the foregoing, a method has been described, which is suitable to be applied for forming a convex tilting zone 23 on a first main body surface 11 of a transverse element 10 for application in a push belt 6 for a continuously variable transmission 1, and which comprises the step of applying a die 30 which is placed against the first main body surface 11 under pressure. However, the die 30 is pressed against the first main body surface 11 just outside of an area 40 where the tilting zone 23 needs to be formed. Under the influence of the treatment with the die 30, a recessed area 27 is arranged in the first main body surface 11, wherein retraction of the material of the transverse element 10 takes place along an upper edge 28 of this area 27. At least a part of a retraction area which is obtained in this manner adjacent to the edge 28 as mentioned is suitable to function as tilting zone 23.

At the side which is suitable for contacting the first main body surface 11 of the transverse element, the die 30 has a stepped surface 31. An important advantage of this design of the die 30 is that the formation of the convex tilting zone 23 can take place with a high accuracy. Also, the pressure which is needed in the process can be lower than in a known situation in which the surface 31 of the die 30 has a planar appearance.

## Claims

1. Method for forming a convex tilting zone (23) in a defined tilting zone formation area (40) of a main body surface (11) of a transverse element (10) which is destined to be part of a push belt (6) for a continuously variable transmission (1) having two pulleys (4, 5) for suspending the push belt (6), wherein a tool element (30) having a surface (31) for at least partially contacting the main body surface (11) is provided, wherein the tool element (30) is pressed against the main body surface (11) adjacent to the tilting zone formation area (40) in order to realize a displacement of material over the main body surface (11), wherein the tool element (30) leaves the tilting zone formation area (40) clear, and wherein the tilting zone (23) is formed on the basis of retraction of material as a consequence of pressing the tool element (30) against the main body surface (11),
**characterized in that** the surface (31) for at least partially contacting the main body surface (11) is a stepped surface.

2. Method according to claim 1, wherein the stepped surface (31) of the tool element (30) comprises two substantially planar surfaces (32, 33) extending at different levels, and a step surface (34) extending between the substantially planar surfaces (32, 33), wherein the tool element (30) is pressed against the main body surface (11) in an orientation in which a substantially planar surface (32) extending at a relatively low level in the tool element (30) is adjacent to the tilting zone formation area (40), and in which a substantially planar surface (33) extending at a relatively high level in the tool element (30) is further remote from the tilting zone formation area (40).

3. Method according to any of claims 1-2, wherein the main body surface (11) of the transverse element (10) has a stepped shape and comprises at least two areas (25, 26) which are extending at different levels and a step surface (24) extending between the areas (25, 26), and wherein the tool element (30) is pressed against an area (26) extending at a relatively high level in the main body surface (11).

4. Method according to claim 3, wherein the tool element (30) is pressed against the main body surface (11) of the transverse element (10) in a position in which both the substantially planar surface (32) extending at a relatively low level in the tool element (30) and only a portion of the substantially planar surface (33) extending at a relatively high level in the tool element (30) cover an area of the main body surface (11) which is located between the tilting zone formation area (40) and the step surface (24).

5. Method according to any of claims 2-4, wherein the substantially planar surface (33) extending at a relatively high level in the tool element (30) is made to move over a distance which is in an order of twice a dimension of the step surface (34) of the tool element (30), measured in a direction in which the tool element (30) is pressed against the main body surface (11) of the transverse element (10), starting from a position of initial contact between the tool element (30) and the main body surface (11).

## Patentansprüche

1. Verfahren zum Bilden einer konvexen Kippzone (23) in einem definierten Kippzonenbildungsbereich (40) einer Hauptkörperfläche (11) eines Querelements (10), das dazu bestimmt ist, Teil eines Schubriemens (6) für ein stufenloses Getriebe (1) zu sein, das zwei Riemenscheiben (4, 5) zum Aufhängen des Schubriemens (6) aufweist, wobei ein Werkzeugelement (30) mit einer Fläche (31) bereitgestellt ist, die zumindest teilweise mit der Hauptkörperfläche (11) in Kontakt ist, wobei das Werkzeugelement (30) gegen die Hauptkörperfläche (11) nahe dem Kippzonenbildungsbereich (40) gedrückt wird, um eine Verlagerung von Material über die Hauptkörperfläche (11) zu realisieren, wobei das Werkzeugelement (30) den Kippzonenbildungsbereich (40) freilässt, und wobei die Kippzone (23) basierend auf Retraktion von Material als Folge des Drückens des Werkzeugelements (30) gegen die Hauptkörperfläche (11) gebildet wird,
**dadurch gekennzeichnet, dass** die Fläche (31), die zumindest teilweise mit der Hauptkörperfläche (11) in Kontakt ist, eine gestufte Fläche ist.

2. Verfahren nach Anspruch 1, wobei die gestufte Fläche (31) des Werkzeugelements (30) zwei im Wesentlichen ebene Flächen (32, 33), die sich auf unterschiedlichen Ebenen erstrecken, und eine Stufenfläche (34), die sich zwischen den im Wesentlichen ebene Flächen (32, 33) erstreckt, umfasst, wobei das Werkzeugelement (30) gegen die Hauptkörperfläche (11) in einer Ausrichtung gedrückt wird, in der sich eine im Wesentlichen ebene Fläche (32), die sich auf einer relativ niedrigen Ebene in dem Werkzeugelement (30) erstreckt, nahe dem Kippzonenbildungsbereich (40) ist, und in der sich eine im Wesentlichen ebene Fläche (33), die sich auf einer relativ hohen Ebene in dem Werkzeugelement (30) erstreckt, weiter entfernt von dem Kippzonenbildungsbereich (40) ist.

3. Verfahren nach einem der Ansprüche 1-2, wobei die Hauptkörperfläche (11) des Querelements (10) eine gestufte Form aufweist und mindestens zwei Bereiche (25, 26), die sich auf unterschiedlichen Ebenen erstrecken, und eine Stufenfläche (24), die sich zwischen den Bereichen (25, 26) erstreckt, umfasst, und wobei das Werkzeugelement (30) gegen einen Bereich (26) gedrückt wird, der sich auf einer relativ hohen Ebene in der Hauptkörperfläche (11) erstreckt.

4. Verfahren nach Anspruch 3, wobei das Werkzeugelement (30) gegen die Hauptkörperfläche (11) des Querelements (10) in einer Position gedrückt wird, in der die im Wesentlichen ebene Fläche (32), die sich auf einer relativ niedrigen Ebene in dem Werkzeugelement (30) erstreckt, und nur ein Teil der im Wesentlichen ebenen Fläche (33), die sich auf einer relativ hohen Ebene in dem Werkzeugelement (30) erstreckt, einen Bereich der Hauptkörperfläche (11) abdecken, der sich zwischen dem Kippzonenbildungsbereich (40) und der Stufenfläche (24) befindet.

5. Verfahren nach einem der Ansprüche 2-4, wobei die im Wesentlichen ebene Fläche (33), die sich auf einer relativ hohen Ebene in dem Werkzeugelement (30) erstreckt, ausgestaltet ist, sich über einen Abstand zu bewegen, der in einem Bereich von dem Doppelten einer Abmessung der Stufenfläche (34) des Werkzeugelements (30) liegt, gemessen in einer Richtung, in der das Werkzeugelement (30) gegen die Hauptkörperfläche (11) des Querelements (10) gedrückt wird, beginnend bei einer Position eines anfänglichen Kontakts zwischen dem Werkzeugelement (30) und der Hauptkörperfläche (11).

## Revendications

1. Procédé de formation d'une zone de basculement convexe (23) dans une région définie (40) de formation de zone de basculement d'une surface de corps principale (11) d'un élément transversal (10) qui est destiné à faire partie d'une courroie de poussée (6) pour une transmission à variation continue (1) ayant deux poulies (4, 5) pour suspendre la courroie de poussée (6), dans lequel un élément formant outil (30) ayant une surface (31) destinée à venir en contact au moins partiellement avec la surface de corps principale (11) est prévu, dans lequel l'élément formant outil (30) est pressé contre la surface de corps principale (11) adjacente à la région (40) de formation de zone de basculement afin de réaliser un déplacement de matière sur la surface de corps principale (11), dans lequel l'élément formant outil (30) laisse dégagée la région (40) de formation de zone de basculement, et dans lequel la zone de basculement (23) est formée sur la base de la rétraction de la matière en conséquence du pressage de l'élément formant outil (30) contre la surface de corps principale (11),
**caractérisé en ce que** la surface (31) destinée à venir en contact au moins partiellement avec la surface de corps principale (11) est une surface étagée.

2. Procédé selon la revendication 1, dans lequel la surface étagée (31) de l'élément formant outil (30) comprend deux surfaces (32, 33) sensiblement planes s'étendant à des niveaux différents, et une surface formant gradin (34) s'étendant entre les surfaces (32, 33) sensiblement planes, dans lequel l'élément formant outil (30) est pressé contre la surface de corps principale (11) dans une orientation dans laquelle une surface (32) sensiblement plane s'étendant à un niveau relativement bas dans l'élément formant outil (30) est adjacente à la région (40) de formation de zone de basculement, et dans laquelle une surface (33) sensiblement plane s'étendant à un niveau relativement élevé dans l'élément formant outil (30) est plus éloignée de la région (40) de formation de zone de basculement.

3. Procédé selon la revendication 1 ou 2, dans lequel la surface de corps principale (11) de l'élément transversal (10) a une forme étagée et comprend au moins deux régions (25, 26) qui s'étendent à des niveaux différents et une surface formant gradin (24) s'étendant entre les régions (25, 26), et dans lequel l'élément formant outil (30) est pressé contre une région (26) s'étendant à un niveau relativement élevé dans la surface de corps principale (11).

4. Procédé selon la revendication 3, dans lequel l'élément formant outil (30) est pressé contre la surface de corps principale (11) de l'élément transversal (10) dans une position dans laquelle à la fois la surface (32) sensiblement plane s'étendant à un niveau relativement bas dans l'élément formant outil (30) et seulement une partie de la surface (33) sensiblement plane s'étendant à un niveau relativement élevé dans l'élément formant outil (30) recouvrent une région de la surface de corps principale (11) qui est située entre la région (40) de formation de zone de basculement et la surface formant gradin (24).

5. Procédé selon l'une quelconque des revendications 2 à 4, dans lequel la surface (33) sensiblement plane s'étendant à un niveau relativement élevé dans l'élément formant outil (30) est amenée à se déplacer sur une distance qui est de l'ordre du double d'une dimension de la surface formant gradin (34) de l'élément formant outil (30), mesurée dans une direction dans laquelle l'élément formant outil (30) est pressé contre la surface de corps principale (11) de l'élément transversal (10), à partir d'une position de contact initial entre l'élément formant outil (30) et la surface de corps principale (11).
